# NOUVEAU FASCICULE DE BREVET EUROPEEN

(11) **EP 3 060 396 B2**
(45) Date de publication et mention de la décision concernant l'opposition: **10.07.2024**
(45) Mention de la délivrance du brevet: 25.07.2018
(21) Numéro de dépôt: 14805975.1
(22) Date de dépôt: 22.10.2014
(51) Int. Cl.: B32B 17/10, B64C 1/14, B60J 7/043

(54) **VERRE FEUILLETÉ MINCE**
DÜNNES VERBUNDGLAS
THIN LAMINATED GLASS

(30) Priorité: 23.10.2013 FR 1360325
(43) Date de publication de la demande: 31.08.2016
(73) Titulaire: SAINT-GOBAIN GLASS FRANCE, 92400 Courbevoie (FR)
(72) Inventeur: LESTRINGANT, Claire, F-75020 Paris (FR); GY, René, F-93140 Bondy (FR); KREMERS, Stephan, 52525 Heinsberg (DE)
(74) Mandataire: Saint-Gobain Recherche
(86) Numéro de dépôt international: PCT/FR2014/052684
(87) Numéro de publication internationale: WO 2015/059406

(56) Documents cités:
- WO-A1-2012/051038
- WO-A1-2012/177426
- WO-A2-2011/010067
- DE-A1- 102004 022 008
- DE-A1- 102009 025 972
- DE-A1- 102009 025 972
- DE-A1- 102010 013 641
- DE-A1- 102010 032 092
- DE-U1- 20 202 223
- JP-A- 2002 029 776
- US-A- 5 928 793
- US-A- 5 928 793
- US-A1- 2004 028 883
- US-A1- 2008 286 548
- US-A1- 2009 297 806
- US-A1- 2010 151 210
- US-A1- 2012 037 229
- US-A1- 2012 328 843
- US-B1- 6 265 054
- US-B1- 6 413 892

## Description

La présente invention a pour objet un vitrage feuilleté mince résistant aux projections de gravillons, et son utilisation dans le domaine de l'automobile ou de l'aéronautique, par exemple en tant que pare-brise ou toit auto.

Les vitrages feuilletés sont couramment utilisés dans le domaine de l'automobile, de l'aéronautique ou du bâtiment, puisqu'ils présentent l'avantage d'être des vitrages dits de « sécurité ». Ils sont constitués de deux feuilles de verre liées entre elles par une couche intercalaire en matière plastique, généralement en polyvinyl butyral (PVB). Pour améliorer la résistance mécanique de ce type de vitrage, il est connu de renforcer les feuilles de verre constitutives en réalisant des trempes et ainsi en créant une zone superficielle en compression et une zone centrale en tension, comme décrit par exemple dans le brevet EP 0560639. Le brevet US 3,558,415 décrit un vitrage feuilleté bombé dans lequel les feuilles de verre externe et interne ont été trempées chimiquement de façon à avoir une zone superficielle en compression. Le brevet GB 1,339,980 décrit un vitrage pour pare-brise dans lequel seule la feuille de verre externe est trempée chimiquement.

Une problématique rencontrée dans le domaine de l'automobile est relative au poids des vitrages. On cherche actuellement à réduire le poids des vitrages, sans pour autant compromettre les propriétés de résistance mécanique. Les demandes de brevet WO 2012/051038 et WO 2012/177426 décrivent des verres feuilletés dans lesquels les feuilles de verre ont une épaisseur inférieure à 2 mm et au moins une des feuilles de verre est trempée chimiquement. La réduction de l'épaisseur des feuilles de verre constitutives du pare-brise permet une diminution de son poids mais peut entrainer des problèmes mécaniques, notamment une augmentation de sa fragilité lorsqu'il est exposé à des projections de gravillons. La solution proposée par les documents cités ci-dessus consiste à tremper chimiquement la feuille de verre externe. Le procédé de trempe chimique, ou d'échange ionique, consiste à substituer en surface un ion de la feuille de verre (généralement un ion alcalin tel que le sodium) par un ion de rayon ionique plus grand (généralement un ion alcalin tel que le potassium) et à créer des contraintes résiduelles de compression en surface de la feuille, jusqu'à une certaine profondeur. Il s'agit d'un procédé relativement couteux et long et par conséquent difficilement compatible avec un procédé industriel en continu.

Il serait utile, pour des raisons de coût, de poids et de simplification de la technologie, de pouvoir disposer d'un verre feuilleté mince présentant une résistance mécanique compatible avec les applications recherchées, et qui soit constitué de feuilles de verre qui ne sont pas nécessairement renforcées. C'est dans ce cadre que s'inscrit la présente invention qui a pour objet un vitrage feuilleté résistant aux projections de gravillons qui comprend au moins une feuille de verre externe et une feuille polymérique, dans lequel la feuille de verre externe a une épaisseur d'au plus 2 mm et un coefficient de dilatation thermique inférieur à 70.10⁻⁷ K⁻¹.

Dans la présente invention, le terme « externe » est utilisé pour tout ce qui est relatif à l'extérieur du dispositif accueillant le vitrage. La feuille de verre externe est par conséquent celle qui est positionnée vers l'extérieur de l'habitacle. Le terme « interne » est par opposition utilisé pour ce qui est relatif à l'intérieur du dispositif accueillant le vitrage. Une feuille interne d'un vitrage feuilleté correspond à la feuille qui est placée vers l'intérieur de l'habitacle.

Les inventeurs ont mis en évidence qu'en réalisant un vitrage feuilleté avec une feuille de verre dont le coefficient de dilatation thermique est faible, c'est-à-dire inférieur à 70.10⁻⁷ K⁻¹, la résistance mécanique était satisfaisante et notamment compatible avec une utilisation du vitrage en tant que pare-brise ou toit pour automobile, malgré l'absence de renforcement mécanique. Une conséquence importante pour le produit final est notamment son allègement, entraînant un allègement du véhicule et une moindre consommation.

La feuille de verre externe a une épaisseur de préférence d'au plus 1,6 mm, voire d'au plus 1,1 mm. Ainsi, cette épaisseur relativement faible de la feuille externe contribue à l'allègement du vitrage feuilleté.

Préférentiellement, la feuille de verre externe a un coefficient de dilatation thermique inférieur à 50.10⁻⁷ K⁻¹.

Selon l'invention, la feuille de verre externe a une composition chimique du type borosilicate. Sa composition chimique comprend les oxydes suivants dans les gammes de teneurs pondérales définies ci-après :

| | |
|---|---|
| SiO₂ | 75-85%, |
| Al₂O₃ | 2-3%, |
| B₂O₃ | 10-15%, |
| Na₂O+K₂O | 3-7 %. |

La composition de verre ci-dessus ne mentionne que les constituants essentiels. Elle ne donne pas les éléments mineurs de la composition, comme les agents affinants classiquement utilisés tels que les oxydes d'arsenic, d'antimoine, d'étain, de cérium, les halogènes ou les sulfures métalliques ou les agents colorants, tels que les oxydes de fer notamment, l'oxyde de cobalt, de chrome, de cuivre, de vanadium, de nickel et le sélénium qui sont la plupart du temps nécessaires pour les applications de verre en vitrage automobile.

Selon l'invention, le vitrage selon l'invention comprend en outre au moins une feuille de verre interne. La feuille polymérique est située entre les deux feuilles de verre et est ainsi une feuille intercalaire.

La feuille interne du vitrage feuilleté a une épaisseur d'au plus 1,1 mm, voire inférieure à 1 mm. Avantageusement, la feuille de verre interne a une épaisseur inférieure ou égale à 0,7 mm. L'épaisseur de la feuille de verre interne est d'au moins 50 µm.

La feuille de verre interne est plus mince que la feuille de verre externe.

Selon un mode de réalisation préféré, les feuilles constitutives du vitrage ne sont pas renforcées. Les feuilles de verre ne sont ni trempées chimiquement, ni thermiquement. N'étant pas renforcée chimiquement, les feuilles ne contiennent normalement pas une surconcentration d'un oxyde alcalin tel que Na ou K en surface par rapport au coeur. Néanmoins, il peut exister des contraintes, avantageusement de compression, dans la feuille de verre qui résulteraient de l'assemblage avec la feuille polymérique.

Il est toutefois possible, si l'utilisateur le souhaite, et dans le cas où le verre le permet, de renforcer chimiquement les feuilles de verre par trempe.

La feuille polymérique peut être constituée d'une ou de plusieurs couches de matériau thermoplastique. Elle peut être en notamment en polyuréthane, en polycarbonate, en polyvinylbutyral (PVB), en polyméthacrylate de méthyle (PMMA), en éthylène vinyl acétate (EVA) ou en résine ionomère. La feuille polymèrique peut se présenter sous la forme d'un film multicouche, possédant des fonctionnalités particulières comme par exemple de meilleures propriétés acoustiques, anti UV.... Elle peut également supporter une ou plusieurs couches minces fonctionnelles : certaines couches peuvent posséder des propriétés anti-rayures contre des agressions accidentelles, d'autres des propriétés conductrices pour conférer au vitrage des fonctions anti-solaire, désembuage et/ou dégivrage.

L'épaisseur de la feuille polymérique est comprise entre 50 µm et 4 mm. Lorsque les feuilles de verre sont très minces et ont une épaisseur inférieure à 1 mm, il peut être avantageux d'utiliser une feuille polymérique d'une épaisseur supérieure à 1 mm, voire supérieure à 2 ou 3 mm pour conférer de la rigidité au vitrage, sans entraîner un alourdissement trop important de la structure.

Lorsque le vitrage feuilleté comprend deux feuilles de verre et la feuille polymérique ou intercalaire, l'épaisseur de l'intercalaire est généralement inférieure à 1 mm. Classiquement, l'intercalaire comprend au moins une couche de PVB. Dans les vitrages automobiles, l'épaisseur de l'intercalaire polymérique est généralement de 0,76 mm.

Le vitrage feuilleté selon la présente invention est considéré comme mince puisqu'il présente une épaisseur totale inférieure à 4,5 mm, et même préférentiellement inférieure à 4 mm. Il possède une meilleure résistance mécanique que les vitrages feuilletés considérés comme minces et connus de l'art antérieur. La durabilité du vitrage est également améliorée, notamment après endommagement par projection de gravillons. Les risques de casse lors de l'application de gradients thermiques sur des vitrages fragilisés, notamment par exemple pendant le dégivrage du pare-brise, sont également réduits.

Le vitrage feuilleté selon la présente invention constitue un vitrage pour automobile et notamment un pare-brise ou un toit. La ou les feuilles constitutives du vitrage feuilleté sont avantageusement bombées avant d'être assemblées avec l'intercalaire polymérique pour former le produit fini.

Le vitrage selon l'invention présente l'avantage de pouvoir être utilisé dans des applications où il est exposé aux projections de gravillons.

Afin de comparer la résistance de différents vitrages feuilletés aux projections de gravillons, un test dit « test Sarbacane » est réalisé. Ce test consiste à lâcher une pointe Vickers en diamant lestée (poids de 3,2 g) sur la face externe d'une plaque de vitrage feuilleté d'une taille de 200x200mm, maintenue dans un cadre souple en caoutchouc à partir de différentes hauteurs comprises entre 100 et 2 000 mm. Le cadre souple permet au vitrage feuilleté de se déformer pendant l'impact de la pointe. On mesure ainsi la hauteur de chute jusqu'à ce qu'une fissure en forme d'étoile soit visible par inspection au microscope, ou dont la dimension maximale dépasse 10 mm, après impact sur la feuille de verre externe (profondeur d'impact comprise entre 100 et 150 µm). On incrémente la hauteur de 100 mm entre chaque lâché de la pointe et la première hauteur à laquelle la fissure est observée est notée. Chaque vitrage feuilleté est testé à 9 points d'impact différents. La valeur de la hauteur de chute donnée dans les exemples ci-après correspond à la moyenne des 9 valeurs de hauteur de casse. La détection de la fissure a lieu immédiatement après la chute de la pointe Vickers.

Les exemples ci-dessous illustrent l'invention sans en limiter la portée.

Le test «Sarbacane» est réalisé sur 4 verres feuilletés minces différents constitués de :
- une feuille de verre interne de type silico-sodocalcique, de composition C1 donnée dans le tableau 1 ci-dessous (verre clair transparent ordinaire),
- un intercalaire polymérique standard en PVB d'une épaisseur de 0,76 mm.
- une feuille de verre externe de composition C2 à C5 donnée dans le tableau 1 ci-dessous.

La composition C1 est un verre silico-sodocalcique. La composition C2 permet d'obtenir des vitrages feuilletés selon la présente invention. Les compositions C2 et C3 sont des verres de type borosilicates. La composition C4 est un verre de type aluminosilicate de lithium. La composition C5 est un verre de type aluminosilicate de sodium. Les compositions C3 à C5 sont données à titre comparatif.

**Tableau 1 : composition des verres**

| % poids | C1 | C2 | C3 | C4 | C5 |
|---|---|---|---|---|---|
| SiO₂ | 71,1 | 80,5 | 63,6 | 68,2 | 60,7 |
| Al₂O₃ | 0,65 | 2,5 | 16 | 18,95 | 7,7 |
| B₂O₃ | | 12,95 | 10,7 | | |
| Na₂O | 13,8 | 3,42 | | | 13,1 |
| K₂O | 0,25 | 0,63 | | | 9,55 |
| Li₂O | | | | 3,45 | |
| CaO | 8,75 | | 7,8 | | |
| MgO | 4 | | 0,1 | 1,2 | 8,4 |
| SrO | | | 0,7 | | |
| ZnO | | | | 1,62 | |
| TiO₂ | | | | 2,58 | |
| ZrO₂ | | | | 1,68 | |

Les coefficients de dilatation thermique des verres de composition C1 à C5 sont donnés dans le tableau 2.

| | C1 | C2 | C3 | C4 | C5 |
|---|---|---|---|---|---|
| CTE (10⁻⁷/K) | 89 | 32 | 32 | 41 | 108 |

La feuille de verre externe est la feuille directement soumise à l'impact de la pointe diamantée.
La première hauteur à laquelle une fissure apparaît sur la feuille externe est mesurée pour chaque vitrage feuilleté testé.

### Exemple 1

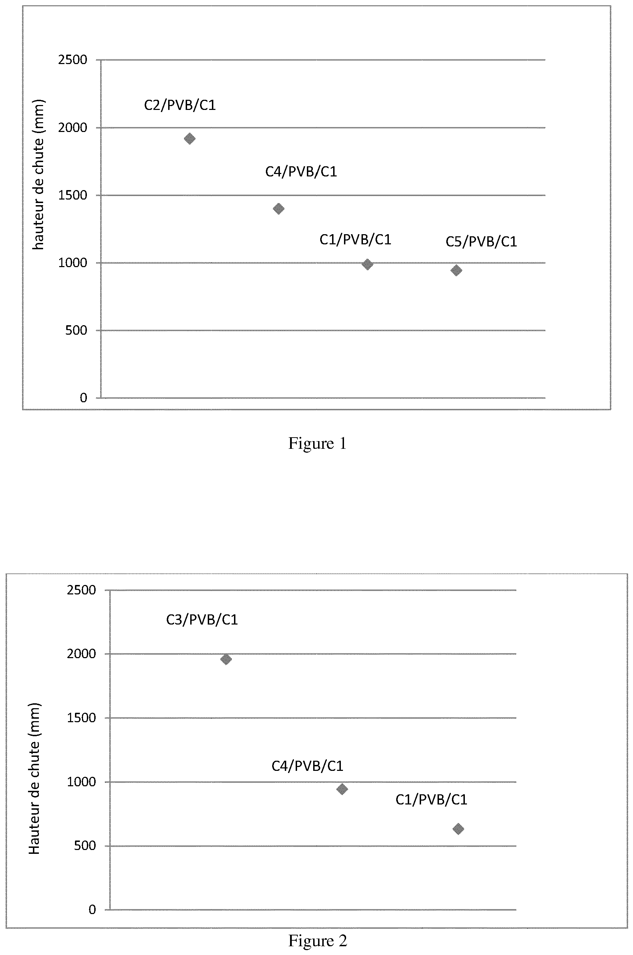

Des verres feuilletés constitués d'une feuille de verre interne de composition C1 d'épaisseur de 0,55 mm, d'un intercalaire en PVB standard d'une épaisseur de 0,76 mm et des feuilles de verre externes de composition C1, C2, C4 et C5 d'épaisseur 1,1 mm sont soumis au test Sarbacane. Les résultats sont donnés à la figure 1 où on représente la hauteur de chute de la pointe Vickers où apparaissent les premières fissures en étoile selon le test Sarbacane décrit précédemment. Les feuilletés testés sont notés de la façon suivante : composition de la feuille de verre externe/nature de la feuille polymérique/composition de la feuille de verre interne. Ainsi, le feuilleté C2/PVB/C1 correspond à une feuille externe en verre de type borosilicate de composition C2, un intercalaire en PVB et une feuille interne en verre silico-sodo calcique de composition C1.

Les vitrages feuilletés C1/PVB/C1, C4/PVB/C1 et C5/PVB/C1 sont non conformes à l'invention et sont donnés à titre comparatif.

On note que les vitrages selon l'invention sont ceux présentant les meilleures résistances mécaniques.

### Exemple 2 (hors invention)

Des verres feuilletés constitués d'une feuille de verre interne de composition C1 d'épaisseur de 0,7 mm, d'un intercalaire en PVB standard d'une épaisseur de 0,76 mm et des feuilles de verre de composition C1, C3 et C4 d'épaisseur 0,7 mm sont soumis au test Sarbacane. Les résultats des tests sont donnés à la figure 2.

Le vitrage feuilleté C1/PVB/C1 est non conforme à l'invention et est donné à titre comparatif.

On note que le vitrage feuilleté C3/PVB/C1 (non conforme à l'invention) a une très bonne résistance mécanique, malgré une faible épaisseur de feuilles (l'épaisseur totale du vitrage feuilleté est de 2,16 mm).

## Revendications

1. Vitrage feuilleté pour automobile résistant aux projections de gravillons comprenant au moins une feuille de verre externe ayant une composition chimique du type borosilicate, une feuille de verre interne et une feuille polymérique située entre les deux feuilles de verre, **caractérisé en ce que** la feuille de verre externe a une épaisseur d'au plus 2 mm et un coefficient de dilatation thermique inférieur à 70.10⁻⁷ K⁻¹, la feuille de verre interne a une épaisseur d'au plus 1,1 mm et est plus mince que la feuille de verre externe, ledit vitrage feuilleté pour automobile étant un pare-brise ou un toit et l'épaisseur totale dudit vitrage feuilleté étant inférieure à 4,5 mm, et la feuille de verre externe comprend entre
| | |
|---|---|
| SiO₂ | 75-85%, |
| Al₂O₃ | 2-3%, |
| B₂O₃ | 10-15%, |
| Na₂O+K₂O | 3-7 %. |

2. Vitrage selon la revendication 1 **caractérisé en ce que** la feuille de verre externe a une épaisseur d'au plus 1,6 mm.

3. Vitrage selon l'une des revendications précédentes **caractérisé en ce que** la feuille de verre externe a un coefficient de dilatation thermique inférieur à 50.10⁻⁷ K⁻¹.

4. Vitrage selon l'une des revendications précédentes **caractérisé en ce que** la feuille polymérique comprend une ou de plusieurs couches de matériau thermoplastique, choisi parmi le polyuréthane, le polycarbonate, le polyvinylbutyral (PVB), le polyméthacrylate de méthyle (PMMA), l'éthylène vinyl acétate (EVA) ou une résine ionomère.

5. Vitrage selon l'une des revendications précédentes **caractérisé en ce que** la feuille interne a une épaisseur inférieure à 1 mm.

6. Vitrage selon l'une des revendications 4 ou 5 **caractérisé en ce que** la feuille polymérique comprend au moins une couche en PVB.

7. Vitrage selon l'une des revendications précédentes **caractérisé en ce que** la feuille de verre interne a une épaisseur inférieure ou égale à 0,7 mm.

8. Vitrage selon l'une des revendications précédentes **caractérisé en ce que** les feuilles de verre sont des feuilles non renforcées chimiquement ou thermiquement.

9. Vitrage selon l'une des revendications précédentes **caractérisé en ce que** les feuilles de verre ne sont ni trempées chimiquement ni trempées thermiquement.

## Patentansprüche

1. Verbundglasscheibe für ein Fahrzeug, beständig gegen Steinschläge und umfassend mindestens eine äußere Glasschicht, eine innere Glasschicht und eine zwischen den Glasschichten befindliche Polymerschicht, **dadurch gekennzeichnet, dass** die äußere Glasschicht eine Dicke von höchstens 2 mm und einen Wärmeausdehnungskoeffizienten von kleiner als 70,10⁻⁷ K⁻¹aufweist, die innere Glasschicht eine Dicke von höchstens 1,1 mm aufweist und dünner ist als die äußere Glasschicht, wobei die Verbundglasscheibe für ein Fahrzeug für eine Windschutzscheibe oder ein Dach bestimmt ist, und die Gesamtdicke der Verbundverglasung weniger als 4,5 mm ist, und die äußere Glasschicht Folgendes umfasst:
| | |
|---|---|
| SiO₂ | 75-85 %, |
| Al₂O₃ | 2-3 %, |
| B₂O₃ | 10-15 %, |
| Na₂O+K₂O | 3-7 %. |

2. Glasscheibe nach Anspruch 1, **dadurch gekennzeichnet, dass** die äußere Glasschicht eine Dicke von höchstens 1,6 mm aufweist.

3. Glasscheibe nach einem der vorhergehenden Ansprüche, **dadurch gekennzeichnet, dass** die äußere Glasschicht einen Wärmeausdehnungskoeffizienten von kleiner als 50,10⁻⁷ K⁻¹ aufweist.

4. Glasscheibe nach einem der vorhergehenden Ansprüche, **dadurch gekennzeichnet, dass** die Polymerschicht eine oder mehrere Lagen aus thermoplastischem Material umfasst, ausgewählt aus Polyurethan, Polycarbonat, Polyvinylbutyral (PVB), Polymethylmethacrylat (PMMA), Ethylenvinylacetat (EVA) oder einem ionomeren Harz.

5. Glasscheibe gemäß einem der vorhergehenden Ansprüche, **dadurch gekennzeichnet, dass** die innere Schicht eine Dicke von weniger als 1 mm aufweist.

6. Glasscheibe gemäß einem der Ansprüche 4 oder 5, **dadurch gekennzeichnet, dass** die Polymerschicht mindestens eine Lage aus PVB umfasst.

7. Glasscheibe gemäß einem der vorhergehenden Ansprüche, **dadurch gekennzeichnet, dass** die innere Schicht eine Dicke kleiner als oder gleich 0,7 mm aufweist.

8. Glasscheibe nach einem der vorhergehenden Ansprüche, **dadurch gekennzeichnet, dass** die Glasschichten Schichten sind, die nicht chemisch oder thermisch verstärkt sind.

9. Glasscheibe nach einem der vorhergehenden Ansprüche, **dadurch gekennzeichnet, dass** die Glasschichten weder chemisch gehärtet noch thermisch gehärtet sind.

## Claims

1. A motor vehicle laminated glazing that is resistant to projections of gravel, comprising at least one outer glass sheet, an inner glass sheet and a polymeric sheet located between the two glass sheets, **characterized in that** the outer glass sheet has a thickness of not more than 2 mm and a coefficient of thermal expansion of less than 70×10⁻⁷ K⁻¹, the inner sheet has a thickness of not more than 1.1 mm and is thinner than the outer glass sheet, said motor vehicle laminated glazing being a windshield or sunroof and the total thickness of said laminating glazing being less than 4.5 mm, and the outer glass sheet comprises
| | |
|---|---|
| SiO₂ | 75-85%, |
| Al₂O₃ | 2-3%, |
| B₂O₃ | 10-15%, |
| Na₂O+K₂O | 3-7%. |

2. The glazing as claimed in claim 1, **characterized in that** the outer glass sheet has a thickness of not more than 1.6 mm.

3. The glazing as claimed in either of the preceding claims, **characterized in that** the outer glass sheet has a coefficient of thermal expansion of less than 50×10⁻⁷ K⁻¹.

4. The glazing as claimed in one of the preceding claims, **characterized in that** the polymeric sheet comprises one or more layers of thermoplastic material chosen from polyurethane, polycarbonate, polyvinyl butyral (PVB), polymethyl methacrylate (PMMA) and ethylene-vinyl acetate (EVA) or an ionomeric resin.

5. The glazing as claimed in one of the preceding claims, **characterized in that** the inner sheet has a thickness of not more than 1 mm.

6. The glazing as claimed in claim 4 or 5, **characterized in that** the polymeric sheet comprises at least one layer of PVB.

7. The glazing as claimed in one of the preceding claims, **characterized in that** the inner glass sheet has a thickness of not more than 0.7 mm.

8. The glazing as claimed in one of the preceding claims, **characterized in that** the glass sheets are sheets that are not chemically or thermally reinforced.

9. The glazing as claimed in one of the preceding claims, **characterized in that** the glass sheets are neither chemically nor thermally tempered.
